# EUROPÄISCHE PATENTSCHRIFT

(11) **EP 1 493 878 B1**
(45) Veröffentlichungstag und Bekanntmachung des Hinweises auf die Patenterteilung: **25.04.2007**
(21) Anmeldenummer: 04015577.2
(22) Anmeldetag: 02.07.2004
(51) Int. Cl.: E04F 15/04, C04B 28/34

(54) **Paneel, insbesondere Fussboden-Laminatpaneel**
Panel, in particular laminated floor panel
Panneau, notament panneau stratifié pour planchers

(30) Priorität: 04.07.2003 DE 10330298
(43) Veröffentlichungstag der Anmeldung: 05.01.2005
(73) Patentinhaber: Flooring Technologies Ltd., Portico Building Marina Street Pieta MSD 08 (MT)
(72) Erfinder:
(74) Vertreter: Rehmann, Thorsten

(56) Entgegenhaltungen:
- DE-C- 10 034 407
- US-A- 4 339 405
- US-A- 4 444 594
- US-B1- 6 262 161

## Beschreibung

Die Erfindung betrifft ein Paneel, insbesondere ein Fußboden-Laminatpaneel mit einem Kern aus Holzwerkstoff, das auf seiner Unterseite mit einer Dämmschicht versehen ist, wobei die Dämmschicht eine höhere Dichte aufweist als der Kern.

Ein solches Paneel ist beispielsweise aus der DE 100 34 407 C1 bekannt. Insbesondere bei Paneelen aus einem Holzwerkstoff, die schwimmend miteinander zu einem Fußboden verlegt werden, entstehen beim Begehen Geräusche, die sich als Trittschall und als Raumschall bemerkbar machen. Um diese Geräuschentwicklung zu reduzieren, ist bei dem bekannten Paneel die Dämmschicht auf der Unterseite des Holzwerkstoffkerns mittels Streifenverleimung befestigt.

Die Dämmschicht kann aus einem Holzfasermaterial, aus Gummi, Kork, Mineralstoff oder Kunststoff bestehen. Das Befestigen der Dämmschicht an der Unterseite des Kerns ist zeitaufwändig und damit kostenintensiv. Wird kein ausreichender Luftraum zwischen dem Kern und der Dämmschicht eingehalten, wird insbesondere Trittschall, das ist der Schall, der nach unten abgestrahlt wird und dann in einem Mehrfamilienhaus in der darunterliegenden Etage wahrgenommen werden kann, nicht ausreichend gedämmt.

Die US-B1-6,262,161 B beschreibt eine brandhemmende Beschichtung, die aus einer Kombination diverser Komponenten in unterschiedlichen Anteilen bestehen kann. Unter anderem kann die Beschichtung dabei auch Anteile von Magnesiumoxid und Ammoniumphosphat enthalten und als Geräuschdämmschicht, -filme, -blätter oder -platten verwendet werden.

Die US-A-4,444,594 beschreibt ein sauerhärtendes Bindemittel, das kompatibel zu Mineralwolle und ein Reaktionsprodukt von Magnesiumoxid und einem sauren Phosphat-, Sulfat- oder Chlorsalz in Anwesenheit von Wasser ist. Das Bindemittel eignet sich als schützende Oberflächenschicht für Deckensysteme und als Schicht oder Kern von neuartigen Decken-, Fußboden- oder Wandprodukten und als Hochtemperatur-Isolationsmaterial.

In der US-A-4,339,405 wird ein lignozellulosehaltiger Werkstoff offenbart, dessen Oberfläche einen Porenraum aufweist und der mit einem mineralischen Bindemittel gebunden wird. Das mineralische Bindemittel kann dabei aus Ammoniumpolyphosphat in wässriger Lösung und mineralischen Partikeln, z. B. Magnesiumoxid oder Calciumoxid bestehen. Haupteinsatzgebiet für Platten, die mit diesem Bindemittel hergestellt wurden, sind Dämmstoffe für Wand-, Decken- und Dachkonstruktionen im Hausbau.

Von dieser Problemstellung ausgehend soll das bekannte Paneel so verbessert werden, dass mit ihm eine gute Raumschall- und Trittschalldämmung geschaffen werden kann, dass es einfach herstellbar ist und dass es weiterhin einfach verlegt werden kann.

Zur Problemlösung zeichnet sich das gattungsgemäße Paneel dadurch aus, dass die Dämmschicht ein Gemisch aus Magnesiumoxid, Ammoniumpolyphosphat und Holzfaser besteht.

Ohne Holzfaser ergibt diese Zusammensetzung eine kaltkeramische Beschichtung, die gute feuerhemmende Eigenschaften aufweist und deshalb als Brandschutzbeschichtung für Holzwerkstoffplatten Verwendung gefunden hat. Überraschenderweise hat sich herausgestellt, dass diese Beschichtung, wenn sie nur auf die Unterseite eines Bodenpaneels aufgebracht wird, die Eigenschaft hat, Gehgeräusche auf das Niveau fest mit dem Untergrund verbundener Fußböden zu reduzieren. Durch die erfindungsgemäße Ausgestaltung ist es also möglich, dass Heimwerker Böden schwimmend verlegen können, die dieselben positiven Schalleigenschaften aufweisen, wie professionell verklebte Böden.

Vorzugsweise können weitere mineralische Bestandteile, wie beispielsweise Glasgranulat, vorgesehen sein.

Insbesondere beträgt vorzugsweise der Anteil an Holzfaser in der Dämmschicht zwischen 5 und 50 Volumenprozent, insbesondere 10 Vol%. Eine solche Beschichtung ist als Brandschutzbeschichtung ungeeignet, die Schalldämm- und Schluckeigenschaften erhöhen sich aber deutlich. Zur Vermeidung des Ausfoggens von Ammoniak bei erhöhter Luftfeuchtigkeit oder wenn die Beschichtung mit Flüssigkeit in Verbindung kommt, kann die Beschichtung versiegelt oder imprägniert sein. Die Versiegelung kann mittels eines Klarlackes erfolgen. Eine Imprägnierung kann auf Basis von Polyurethan vorgesehen sein. Durch die Versiegelung bzw. Imprägnierung werden die Poren der Beschichtung verschlossen.

Die Dämmschicht weist vorzugsweise eine Dicke von 0,2 - 10 und insbesondere vorzugsweise eine Dicke von 1 - 3 mm auf.

Je dicker die kaltkeramische Beschichtung ausgeführt werden soll, um so höher wird der Anteil an Holzfasern gewählt.

Die Dämmschicht kann unmittelbar auf die Unterseite des Kerns aufgebracht werden und bei einem Laminatpaneel als Gegenzug zu der Dekorschicht dienen. Auf die Dämmschicht kann aber auch noch ein aus einer Papierlage bestehender herkömmlicher Gegenzug aufgebracht werden. Ebenso kann die Dämmschicht auf einen bereits mit dem Kern verbundenen Gegenzug aus einer Papierlage aufgebracht werden.

Die Dichte der Dämmschicht beträgt vorzugsweise zwischen 1000 und 1500 kg/m³.

Die Rohplatte aus Holzwerkstoff, insbesondere MDF, HDF oder OSB, die zur Verwendung als Ausgangsmaterial für eine Fußbodenplatte dient, wird zur Beschichtung mit der Dämmschicht wie folgt behandelt:
a) Aufrauen der Oberseite des Kerns, bis die Fasern des Holzwerkstoffs hochstehen,
b) Tränken der Oberseite des Kerns mit einem Gemisch aus reinem Magnesiumoxid und Ammoniumpolyphosphat,
c) Aufbringen einer kaltkeramischen Beschichtung als Dämmschicht die im Wesentlichen aus Holzfasern, Magnesiumoxid und Ammoniumpolyphosphat besteht.

Die Haftung der kaltkeramischen Beschichtung auf der Platte wird verbessert, wenn nach dem Tränken mit Magnesiumoxid und Ammoniumpolyphosphat Holzfasern auf die Oberseite des Kerns aufgestreut werden.

Je dicker die kaltkeramische Beschichtung ausgeführt werden soll, um so höher wird der Anteil an Holzfasern gewählt.

Die Dämmschicht kann aufgewalzt, aufgegossen oder aufgesprüht werden. Ist der Anteil an Holzfasern in der Dämmschicht hoch genug, kann diese auch aufgestreut werden.

Um eine glatte Oberfläche der Dämmschicht zu erzeugen, wird die beschichtete Platte mit einem geringen Druck von weniger als 30 bar, insbesondere 15 bar, beaufschlagt. Wenn gleichzeitig eine Temperatur von 55 °C angelegt wird, wird das Ausdampfen von Ammoniak erreicht.

Mit Hilfe einer Zeichnung soll ein Ausführungsbeispiel der Erfindung nachfolgend näher beschrieben werden.

Das Paneel besteht aus einem Kern 1 aus einem Holzwerkstoff, insbesondere MDF, HDF oder OSB, mit einer auf seiner Oberseite aufgebrachten Dekorschicht 6. An einer Längs- und einer Querseite ist das Paneel mit einer aus dem Kern 1 herausgefrästen Feder 4 versehen. An den gegenüberliegenden Längs- und Querseiten ist aus dem Kern 1 eine zur Feder 4 korrespondiere Nut 7 herausgefräst. Die Unterseite der Feder 4 weist einen Vorsprung 5 auf, der zu einer Sicke 8 in der Unterlippe 9 der Nut 7 korrespondiert. Der Vorsprung 5 und die Sicke 8 bilden Verriegelungsmittel, die ein Auseinanderschieben zweier miteinander verbundener Paneele in Querrichtung Q verhindern.

Die Unterseite des Kerns 1 ist mit einer Dämmschicht 2 versehen, die aus einem Gemisch aus Magnesiumoxid, Ammoniumpolyphosphat und Holzfaser besteht. Die Schicht kann Granulat zur Trittschallbrechung und/oder Metallpartikel zur Reduktion der statischen Aufladung enthalten. Der Holzfaseranteil beträgt zwischen 5 und 50 Vol. %, vorzugsweise 10 Vol. %. Auf die Dämmschicht 2 ist ein aus einer Papierlage bestehender Gegenzug 3 auflaminiert, der ein Verbiegen des Paneels in Folge der von der Dekorschicht 6 herrührenden Zugkräfte verhindert. Die Dämmschicht 2 kann eine Dicke von 0,2 - 10 mm aufweisen. Sie ist auf die Unterseite des Kerns aufgewalzt oder aufgesprüht. Wenn die Dämmschicht 2 dick genug ist, kann sie die Aufgaben des Gegenzugs 3 übernehmen, so dass dieser entfallen kann. Die Dämmschicht 2 kann auch auf den Gegenzug 3 aufgebracht werden, der unmittelbar mit dem Kern 1 des Paneels verbunden ist, so dass auch herkömmlich produzierte Holzwerkstoffplatten (Dekorschicht 6, Kern 1, Gegenzug 3) mit der Schalldämmung versehen werden können.

Das Gemisch aus Magnesiumoxid, Ammoniumpolyphosphat und Holzfaser kann außerdem noch mineralische Füller und Dolomit enthalten. Als mineralische Füller kommen Glasgranulat, Steingranulat, Asche, Sand oder Filterstäube in Betracht. Je feiner gemahlener die mineralischen Bestandteile sind, um so feinporiger ist die Oberfläche der Schalldämmschicht. Die trockenen Bestandteile werden zuerst gemischt. Flüssiges Ammoniumpolyphosphat wird anschließend zu dem Gemisch zugegeben und verrührt. Die chemische Reaktion ist sehr schnell und das flüssige Gemisch kann nur 3 - 5 Minuten lang verarbeitet werden. Das Gemisch kann aufgesprüht oder aufgewalzt werden. Um die Reaktion zu verlangsamen, kann dem Gemisch Borax zugegeben werden. Der Boraxanteil beträgt cirka 1 % des Anteils an Magnesium. Bevor das Gemisch vollständig ausgehärtet ist, kann die Beschichtung mit einem geringen Druck beaufschlagt werden, um eine glatte Oberfläche zu erzeugen. Versuche mit einer Druckbeaufschlagung von 30 bar haben gute Ergebnisse geliefert. 15 bar reichen sicherlich auch aus.

Je dicker die Dämmschicht gewählt wird, um so mehr Füllmittel, insbesondere Holzfasern, werden mit dem Magnesiumoxid und dem Ammoniumpolyphosphat vermischt. Die Holzfasern dienen als Füllmittel. Auch andere Füllmittel, wie beispielsweise Glasfasern, können verwendet werden. Ist der Anteil an Füllmittel groß genug, kann die Beschichtung auf die Plattenoberseite auch aufgestreut werden.

Die Beschichtung hat außerdem den Vorteil, dass sie 100 % wasserdicht ist und dadurch feuchte oder feucht werdende Untergründe für den Fußboden unkritisch sind. Dadurch, dass die Oberfläche der Beschichtung offenporig ist, kann Feuchtigkeit zumindest oberflächlich eindringen, was für die Beschichtung unkritisch ist. Die Feuchtigkeit bewirkt aber, dass Ammoniakdämpfe ausgasen können. Für eine bestimmte Zeit kann dies durch entsprechende Zumischung des Magnesiumoxids verhindert werden. Wenn die Beschichtung einer erhöhten Temperatur ausgesetzt wird, bevor sie vollständig ausgehärtet ist, wird bereits bei der Herstellung das Ausdampfen eines großen Anteiles Ammoniak provoziert. Versuche haben gezeigt, dass eine Temperatureinwirkung von 55 °C ausreichend ist. Vorzugsweise wird das Pressblech entsprechend erhitzt, mit dem die glatte Oberfläche erzeugt wird. Um das Ausfoggen von Ammoniak dauerhaft zu verhindern, ist die Beschichtung mit einem Klarlack versiegelt oder mit einem Polyurethan-Kunststoff. Dadurch werden die Poren weitestgehend verschlossen, so dass keine Feuchtigkeit eindringen kann.

Eine keramische Beschichtung mit folgender Zusammensetzung hat sich als gut geeignet erwiesen:

| | |
|---|---|
| gebranntes Magnesiumoxid | 33,8 Gew.% |
| Ammoniumpolyphosphat | 28,8 Gew.% |
| Glasgranulat | 25,6 Gew.% |
| Asche | 11,8 Gew.% |

Ein ebenfalls gutes Verhalten zeigte folgende Zusammensetzung für die keramische Beschichtung:

| | |
|---|---|
| gebranntes Magnesiumoxid | 32,7 Gew.% |
| Ammoniumpolyphosphat | 28,1 Gew.% |
| mineralische Füllstoffe (Asche, Glasgranulat, Vermiculit, Dolomit) | 39,2 Gew.% |
| Farbstoff | < 0,006 Gew. % |

Bei dieser Zusammensetzung wurde die Masse der Holzfasern aufgrund ihres geringen Gewichtes vernachlässigt. Beim Beschichten der Platte wurde die Holzfaser auf die Oberfläche aufgestreut. Der Anteil von Ammoniumpolyphosphat ist vorzugsweise immer niedriger als der Anteil an Magnesiumoxid. Ein Anteil von bis hin zu 70 % hat sich als brauchbar erwiesen.

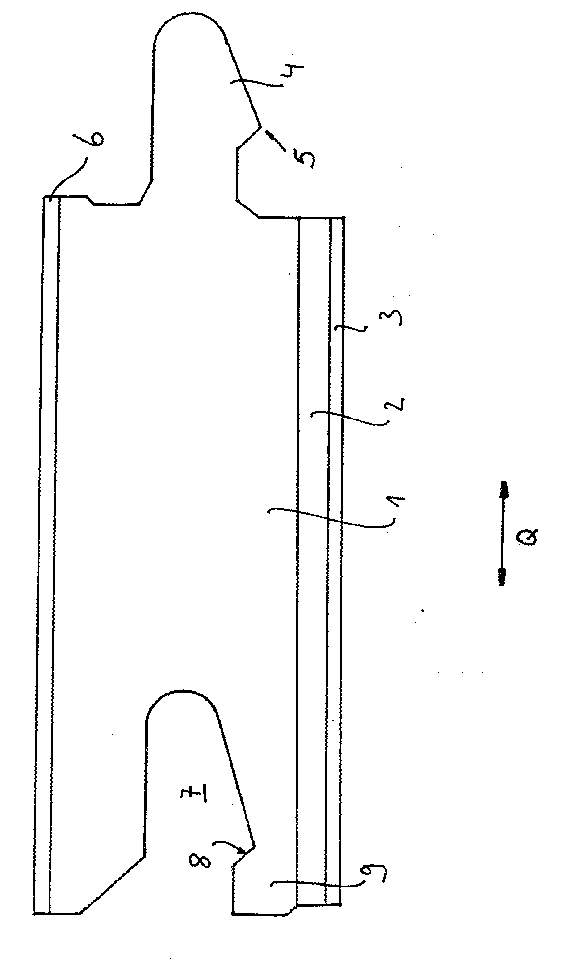

## Patentansprüche

1. Paneel, insbesondere Fußboden-Laminatpaneel mit einem Kern (1) aus Holzwerkstoff, das auf einer Unterseite mit einer Dämmschicht (2) versehen ist, wobei die Dämmschicht (2) eine höhere Dichte aufweist als der Kern (1), **dadurch gekennzeichnet, dass** die Dämmschicht (2) aus einem Gemisch aus Magnesiumoxid, Ammoniumpolyphosphat und Holzfaser besteht.

2. Paneel nach Anspruch 1, **dadurch gekennzeichnet, dass** der Anteil an Holzfaser zwischen 5 und 50 Vol.%, insbesondere 10 Vol.%, beträgt.

3. Paneel nach Anspruch 1 oder 2, **dadurch gekennzeichnet, dass** dem Gemisch für die Dämmschicht (2) weitere mineralische Komponenten zugesetzt sind.

4. Paneel nach Anspruch 1, **dadurch gekennzeichnet, dass** die Dämmschicht (2) eine Dicke von 0,2 - 10 mm aufweist.

5. Paneel nach Anspruch 4, **dadurch gekennzeichnet, dass** die Dicke der Dämmschicht (2) 1 - 3 mm beträgt.

6. Paneel nach einem oder mehreren der vorstehenden Ansprüche, **dadurch gekennzeichnet, dass** die Dämmschicht (2) unmittelbar auf die Unterseite des Kerns (1) aufgebracht ist.

7. Paneel nach Anspruch 6, **dadurch gekennzeichnet, dass** auf die Dämmschicht (2) ein aus einer Papierlage bestehender Gegenzug (3) aufgebracht ist.

8. Paneel nach einem oder mehreren der vorstehenden Ansprüche, **dadurch gekennzeichnet, dass** die Dämmschicht (2) auf einen aus einer Papierlage bestehenden Gegenzug (3) aufgebracht ist.

9. Paneel nach Anspruch 1, **dadurch gekennzeichnet, dass** die Dichte der Dämmschicht 1000 - 1500 kg/m³ beträgt.

10. Paneel nach einem oder mehreren der vorstehenden Ansprüche, **dadurch gekennzeichnet, dass** die Dämmschicht (2) aufwalzbar ist.

11. Paneel nach einem oder mehreren der vorstehenden Ansprüche, **dadurch gekennzeichnet, dass** die Dämmschicht (2) aufsprühbar ist.

12. Verfahren zum Veredeln einer Platte mit einem Kern (1) aus Holzwerkstoff, insbesondere MDF, HDF oder OSB, zur Verwendung als Ausgangsmaterial für ein Paneel nach einem oder mehreren der vorstehenden Ansprüche, **gekennzeichnet durch** folgende Schritte:
a) Aufrauen der Oberseite des Kerns (1), bis die Fasern des Holzwerkstoffs hochstehen,
b) Tränken der Oberseite des Kerns (1) mit einem Gemisch aus reinem Magnesiumoxid und Ammoniumpolyphosphat,
c) Aufbringen einer im Wesentlichen aus Holzfaser, Magnesiumoxid und Ammoniumpolyphosphat bestehenden kaltkeramischen Beschichtung als Dämmschicht (2).

13. Verfahren nach Anspruch 12, **dadurch gekennzeichnet, dass** nach dem Tränken mit einem Gemisch aus reinem Magnesiumoxid und Ammoniumpolyphosphat Holzfasern auf die Oberseite des Kerns (1) aufgestreut werden.

14. Verfahren nach Anspruch 12, **dadurch gekennzeichnet, dass** die kaltkeramische Beschichtung auf die Oberseite des Kerns (1) aufgestreut wird.

15. Verfahren nach einem der Ansprüche 12 bis 14, **dadurch gekennzeichnet, dass** auf die Dämmschicht (2) eine Lackschicht aufgebracht wird.

16. Verfahren nach einem der Ansprüche 12 bis 14, **gekennzeichnet durch** das Aufbringen einer Imprägnierung auf PU-Basis zum Verhindern des Ausfoggens von Ammoniakdämpfen.

17. Verfahren nach einem der Ansprüche 12 bis 14, **dadurch gekennzeichnet, dass** die Dämmschicht durch Druck- und/oder Temperatureinwirkung verfestigt wird.

18. Verfahren nach Anspruch 17, **dadurch gekennzeichnet, dass** die Temperatur in etwa 55 °C beträgt.

19. Verfahren nach Anspruch 17, **dadurch gekennzeichnet, dass** der Druck kleiner als 30 bar ist.

20. Verfahren nach Anspruch 19, **dadurch gekennzeichnet, dass** der Druck 15 bar beträgt.

## Claims

1. Panel, especially laminated floor panel, with a core (1) composed of wood material which is provided with an insulating layer (2) on a lower side, the insulating layer (2) having a higher thickness than the core (1), **characterized in that** the insulating layer (2) consists of a mixture of magnesium oxide, ammonium polyphosphate and wood fibre.

2. Panel according to Claim 1, **characterized in that** the proportion of wood fibre is between 5 and 50% by volume, in particular 10% by volume.

3. Panel according to Claim 1 or 2, **characterized in that** further mineral components are added to the mixture for the insulating layer (2).

4. Panel according to Claim 1, **characterized in that** the insulating layer (2) has a thickness of 0.2 - 10 mm.

5. Panel according to Claim 4, **characterized in that** the thickness of the insulating layer (2) is 1 - 3 mm.

6. Panel according to one or more of the preceding claims, **characterized in that** the insulating layer (2) is applied directly to the lower side of the core (1).

7. Panel according to Claim 6, **characterized in that** a backing (3) consisting of a paper layer is applied to the insulating layer (2).

8. Panel according to one or more of the preceding claims, **characterized in that** the insulating layer (2) is applied to a backing (3) consisting of a paper layer.

9. Panel according to Claim 1, **characterized in that** the density of the insulating layer is 1000 - 1500 kg/m³.

10. Panel according to one or more of the preceding claims, **characterized in that** the insulating layer (2) can be applied by means of rollers.

11. Panel according to one or more of the preceding claims, **characterized in that** the insulating layer (2) can be applied by spraying.

12. Process for modifying a board with a core (1) composed of wood material, especially MDF, HDF or OSB, for use as a starting material for a panel according to one or more of the preceding claims, **characterized by** the following steps:
a) roughening the upper side of the core (1) until the fibres of the wood material stand up,
b) impregnating the upper side of the core (1) with a mixture of pure magnesium oxide and ammonium polyphosphate,
c) applying a cold ceramic coating consisting essentially of wood fibre, magnesium oxide and ammonium polyphosphate as an insulating layer (2).

13. Process according to Claim 12, **characterized in that** the impregnation with a mixture of pure magnesium oxide and ammonium polyphosphate is followed by scattering of wood fibres onto the upper side of the core (1).

14. Process according to Claim 12, **characterized in that** the cold ceramic coating is scattered onto the upper side of the core (1).

15. Process according to one of Claims 12 to 14, **characterized in that** a varnish layer is applied to the insulating layer (2).

16. Process according to one of Claims 12 to 14, **characterized by** the application of a PU-based impregnation to prevent the volatilization of ammonia vapours.

17. Process according to one of Claims 12 to 14, **characterized in that** the insulating layer is consolidated by the action of pressure and/or temperature.

18. Process according to Claim 17, **characterized in that** the temperature is about 55°C.

19. Process according to Claim 17, **characterized in that** the pressure is less than 30 bar.

20. Process according to Claim 19, **characterized in that** the pressure is 15 bar.

## Revendications

1. Panneau, notamment panneau stratifié pour plancher comportant une âme (1) en matériau à base de bois dont un côté inférieur est pourvu d'une couche d'insonorisation (2), cette couche d'insonorisation (2) présentant une densité supérieure à l'âme (1), **caractérisé en ce que** la couche d'insonorisation (2) est constituée par un mélange d'oxyde de magnésium, de polyphosphate d'ammonium et de fibres de bois.

2. Panneau selon la revendication 1, **caractérisé en ce que** la proportion en fibres de bois est comprise entre 5 et 50% en volume et est en particulier égale à 10% en volume.

3. Panneau selon l'une des revendications 1 ou 2, **caractérisé en ce que** le mélange pour la couche d'insonorisation (2) comporte d'autres composés minéraux.

4. Panneau selon la revendication 1, **caractérisé en ce que** la couche d'insonorisation (2) présente une épaisseur de 0,2 à 10mm.

5. Panneau selon la revendication 4, **caractérisé en ce que** l'épaisseur de la couche d'insonorisation (2) est de 1 à 3 mm.

6. Panneau selon l'une ou plusieurs des revendications précédentes, **caractérisé en ce que** la couche d'insonorisation (2) est appliquée directement sur le côté inférieur de l'âme (1).

7. Panneau selon la revendication 6, **caractérisé en ce que** sur la couche d'insonorisation (2) est appliquée une couche de contretraction (3) constituée de papier.

8. Panneau selon une ou plusieurs des revendications précédentes, **caractérisé en ce que** la couche d'insonorisation (2) est appliquée sur une couche de contretraction (3) en papier.

9. Panneau selon la revendication 1, **caractérisé en ce que** la densité de la couche d'insonorisation est de 1000 à 1500 kg/m³.

10. Panneau selon une ou plusieurs des revendications précédentes, **caractérisé en ce que** la couche d'insonorisation (2) est laminable.

11. Panneau selon une ou plusieurs des revendications précédentes, **caractérisé en ce que** la couche d'insonorisation (2) est projetable.

12. Procédé pour valoriser une plaque comportant une âme (1) en matériau à base de bois, en particulier en MDF, HDF ou OSB, pour l'utilisation en tant que matériau de base pour un panneau selon une ou plusieurs des revendications précédentes, **caractérisé par** les étapes suivantes :
a) abrasion du côté supérieur de l'âme (1) jusqu'à ce que les fibres du matériau à base de bois fassent saillie,
b) imprégnation du côté supérieur de l'âme par un mélange d'oxyde de magnésium et de polyphosphate d'ammonium,
c) application en tant que couche d'insonorisation (2) d'un revêtement de céramique à froid constitué essentiellement de fibres de bois, d'oxyde de magnésium et de polyphosphate d'ammonium.

13. Procédé selon la revendication 12, **caractérisé en ce qu'**après l'imprégnation par un mélange pur d'oxyde de magnésium et de polyphosphate d'ammonium on disperse des fibres de bois sur le côté supérieur de l'âme (1).

14. Procédé selon la revendication 12, **caractérisé en ce que** le revêtement de céramique à froid est dispersé sur le côté supérieur de l'âme (1).

15. Procédé selon l'une des revendications 12 à 14, **caractérisé en ce qu'**une couche de peinture est appliquée sur la couche insonorisante (2).

16. Procédé selon l'une des revendications 12 à 14, **caractérisé par** l'application d'une imprégnation à base de PU pour empêcher l'émission de vapeurs d'ammoniac.

17. Procédé selon l'une des revendications 12 à14, **caractérisé en ce que** la couche d'insonorisation est renforcée par action d'une pression et/ou de la température.

18. Procédé selon la revendication 17, **caractérisé en ce que** la température est de l'ordre de 55°C.

19. Procédé selon la revendication 17, **caractérisé en ce que** la pression est inférieure à 30 bar.

20. Procédé selon la revendication 19, **caractérisé en ce que** la pression est égale à 15 bar.
